# EUROPÄISCHE PATENTSCHRIFT

(11) **EP 3 074 643 B1**
(45) Veröffentlichungstag und Bekanntmachung des Hinweises auf die Patenterteilung: **31.10.2018**
(21) Anmeldenummer: 14830373.8
(22) Anmeldetag: 26.11.2014
(51) Int. Cl.: F16B 5/02, F16B 37/06

(54) **JUSTIERBARE BEFESTIGUNGSVORRICHTUNG UND VERFAHREN ZUR HERSTELLUNG EINER VORGEFERTIGTEN BAUGRUPPE AUS ZUMINDEST EINER JUSTIERBAREN BEFESTIGUNGSVORRICHTUNG UND EINEM BAUTEIL**
ADJUSTABLE FASTENING DEVICE AND METHOD FOR PRODUCING A PREFABRICATED SUBASSEMBLY FROM AT LEAST ONE ADJUSTABLE FASTENING DEVICE AND A COMPONENT
DISPOSITIF DE FIXATION AJUSTABLE ET PROCÉDÉ DE FABRICATION D'UN MODULE PRÉFABRIQUÉ À PARTIR D'AU MOINS UN DISPOSITIF DE FIXATION AJUSTABLE ET D'UNE PIÈCE

(30) Priorität: 27.11.2013 DE 102013113098; 28.11.2013 DE 102013113154
(43) Veröffentlichungstag der Anmeldung: 05.10.2016
(73) Patentinhaber: Schmidt, Heiko, 93138 Lappersdorf (DE)
(72) Erfinder: Schmidt, Heiko, 93138 Lappersdorf (DE)
(74) Vertreter: Glück Kritzenberger Patentanwälte PartGmbB
(86) Internationale Anmeldenummer: PCT/DE2014/100415
(87) Internationale Veröffentlichungsnummer: WO 2015/078450

(56) Entgegenhaltungen:
- WO-A1-2006/063634
- DE-C1- 3 620 005
- DE-U1-202005 016 823
- US-A1- 2010 303 582

## Beschreibung

Die Erfindung betrifft eine justierbare Befestigungsvorrichtung gemäß dem Oberbegriff des Patentanspruches 1 sowie ein Verfahren zur Herstellung einer vorgefertigten Baugruppe.

Justierbare Befestigungsvorrichtungen zur Befestigung von zumindest einem aus einem Flachmaterial hergestellten Bauteil an einem weiteren Bauteil, vorzugsweise einem Haltebauteil in einem vorgegebenen Abstand zueinander sind prinzipiell bekannt.

Der Abstand zwischen dem Bauteil und dem Haltebauteil soll bei der Montage über eine derartige Befestigungsvorrichtung einstellbar bzw. justierbar sein. Beispielsweise ist das Bauteil ein zur Aufnahme der Gehäusewand eines Haushaltsgerätes vorgesehenes Formteil aus Metallblech, welches beispielsweise durch Stanz-, Press- und/oder Fügevorgänge hergestellt ist, und zwar vorzugsweise in Form einer vorgefertigten Baugruppe.

Derartige justierbare Befestigungsvorrichtungen bestehen in Regel aus einer Hülsenmutter, die zur Aufnahme einer Trommelschraube eine zylinderförmige Ausnehmung mit einem konzentrisch zur Längsachse der Hülsenmutter verlaufenden ersten Innengewinde aufweist. Die Trommelschraube weist ein Außengewinde auf, welches in das erste Innengewinde der Hülsenmutter eingreift. Die Hülsenmutter wird mit Ihrem unteren freien Rand auf der Oberseite des Bauteils durch Schweißen verdrehungssicher befestigt, und zwar derart, dass dieses eine Fügeöffnung im Bauteil umschließt und somit weiterhin durch die Fügeöffnung von der Unterseite des Bauteils die Trommelschraube in die Hülsenmutter ein- oder ausschraubbar ist. Die Hülsenmutter weist ferner eine dem Schweißrand gegenüberliegende Durchgangsbohrung mit einem zweiten Innengewinde auf, in welches eine durch eine zentrale Spannschraubendurchführung der Trommelschraube geführte Spannschraube mit ihrem Außengewinde einschraubbar ist.

Zur Montage des Bauteils am Haltebauteil wird zunächst von der Unterseite des plattenartigen Bauteils die Trommelschraube in die Hülsenmutter eingeschraubt, und zwar derart weit, dass diese mit einem vorgegebenen Abstand von der Unterseite des plattenartigen Bauteils nach unten übersteht. Anschließend wird die Spannschraube zunächst durch eine Bohrung im Haltebauteil und die Spannschraubendurchführung der Trommelschraube geführt und in das zweite Innengewinde der Hülsenmutter eingeschraubt. Hierbei kommt die flach ausgebildete Stirnseite der Trommelschraube am Halteteil zur Anlage und aufgrund der dadurch entstehenden Reibkräfte und einer entsprechenden Orientierung der Gewinde wird ein Mitdrehen der Trommelschraube beim Festschrauben der Spannschraube verhindert. Das Halteteil wird somit zwischen dem Schraubenkopf der Spannschraube und der Stirnseite der Trommelschraube eingespannt und dadurch weist die Unterseite des plattenartigen Bauteils und das Halteteil den über die Trommelschraube eingestellten Abstand auf. Nachteilig ist hierzu jedoch ein Verschweißen der Hülsenmutter mit dem plattenförmigen Bauteil erforderlich, welches einen zusätzlichen zeit- und kostenintensiven Arbeitsgang im Rahmen der Herstellung von vorgefertigten Baugruppen darstellt. Auch kann die Trommelschraube erst nach dem Schweißvorgang in die Hülsenmutter eingeführt werden, d.h. bei der Montage der vorgefertigten Baugruppe im Rahmen der Serienfertigung ist nachteilig eine vereinzelte Zuführung und Montage der Trommelschraube erforderlich.

Weitere Befestigungsvorrichtungen sind beispielsweise aus der WO 2006/063634 A1 bekannt, welche eine Vorrichtung zum Befestigen eines Anbauteils und eines Trägerteils in einem Abstand voneinander beschreibt, bei der eine Einbaumutter und eine Ausgleichsbuchse aus Kunststoff vorgesehen sind. Die Einbaumutter wird mittels gegenüberliegender, radial nach außen vorstehender Anlagevorsprünge mit dem Trägerteil durch Kraft- und/oder Formschluss verbunden.

Ebenso offenbart die DE 36 20 005 C1 eine Vorrichtung zum Einstellen eines ersten Bauteils relativ zu einem zweiten Bauteil, bei der eine Distanzbuchse vorgesehen ist. Die Distanzbuchse ist aus einer Nietmutter und einer Stellschraube zusammengesetzt. Die Nietmutter ist topfförmig ausgebildet und weist einen Topfboden und eine zylindrische Topfwand auf, wobei ein ein Gewinde aufweisender Fortsatz im Zentrum des Topfbodens zusammen mit einer Falz durch eine Öffnung des ersten Bauteils gesteckt ist, derart, dass die Nietmutter gegen die dem zweiten Bauteil zugewandte Innenseite des ersten Bauteils anliegt. Zum Einstellen und Befestigen der Bauteile wird als erstes die Nietmutter in das erste Bauteil genietet und festgelegt. Dazu wird beim Nietvorgang der Falz umgebördelt, so dass er sich um den Rand der Öffnung legt und die Nietmutter hält. Diese umgebördelte Falz, welche als Nietbund zur Sicherung der Nietmutter verstanden werden kann, ist außenseitig am ersten Bauteil vorgesehen und liegt im Bereich des Öffnungsrandes gegen das Bauteil an.

Ein weiteres Beispiel einer Befestigungsvorrichtung der oben beschriebenen Art, bei der eine Hülsenmutter durch Vernieten mit dem Bauteil verbunden wird, gibt die US 2010/0303582 A1 an.

Ausgehend von dem voranstehend genannten Stand der Technik liegt der Erfindung die Aufgabe zugrunde, eine justierbare Befestigungsvorrichtung sowie ein zugehöriges Verfahren zur Herstellung einer vorgefertigten Baugruppen aus zumindest einer justierbaren Befestigungsvorrichtung und einem Bauteil aufzuzeigen, welche die beschriebenen Nachteile beseitigt und insbesondere eine einfache und schnelle Herstellung vorgefertigter Baugruppen sowie deren Montage im Rahmen einer Serienfertigung ermöglicht. Die Aufgabe wird durch eine justierbare Befestigungsvorrichtung gemäß dem Patentanspruch 1 und ein zugehöriges Verfahren gemäß dem Patentanspruch 15 gelöst.

Der wesentliche Aspekt der erfindungsgemäßen Justierschraubvorrichtung ist darin zu sehen, dass die Hülsenmutter an dem die Öffnung der Ausnehmung bildenden freien Randbereich einen Nietbundabschnitt und einen in die Ausnehmung in Richtung des Nietbundabschnittes hineinragenden zentralen Hülsenabschnitt aufweist, wobei die Spannschraubendurchführung der Trommelschraube zur zumindest teilweisen Aufnahme des zentralen Hülsenabschnittes ausgebildet ist. Besonders vorteilhaft ist durch die erfindungsgemäße Ausbildung der Spannschraubendurchführung und des zentralen Hülsenabschnittes ein tieferes Einschrauben der Trommelschraube in die Hülsenmutter bei gleichbleibender Stabilität der Schraubverbindung zwischen Hülsenmutter und einer mit dieser verschraubten Spannschraube gewährleistet, da der im Vergleich zu einer zylinderförmigen Ausnehmung und einem zylinderförmigen Verlauf der Spannschraubendurchführung gemäß dem Stand der Technik erforderliche Verstellweg der Spannschraube gewährleistet ist. Auch ist hierdurch die Trommelschraube vollständig in der Hülsenmutter aufgenommen, so dass eine Vormontage dessen möglich ist und anschließend die derart vormontierte justierbare Befestigungsvorrichtung vorzugsweise in einem Arbeitsgang mit einem Bauteil vernietet oder verpresst werden kann.

In einer vorteilhaften Ausführungsvariante ist der Nietbundabschnitt hülsenartig ausgebildet ist und verläuft konzentrisch zur Längsachse der justierbaren Befestigungsvorrichtung. Damit kann unter Verwendung an sich bekannter Stempelwerkzeuge eine Montage der justierbaren Befestigungsvorrichtung im Rahmen der Bauteilfertigung erfolgen. In einer weiteren Ausführungsvariante verläuft der Nietbundabschnitt leicht konisch nach außen oder innen zu, und zwar entlang der Längsachse.

Weiterhin vorteilhaft nimmt der zentrale Hülsenabschnitt die Durchgangsbohrung der Hülsenmutter auf und läuft in Richtung des freien Randbereiches entlang der Längsachse konisch zu. Vorzugsweise ist der zentrale Hülsenabschnitt konzentrisch zur Längsachse ausgebildet. Hierdurch ist ein schnelles und zuverlässiges Herstellen einer Klemmverbindung zwischen der Trommelschraube und der Hülsenmutter bei einer gleichzeitigen Erhöhung der Einschraubtiefe möglich.

Die Spannschraubendurchführung weist in einer bevorzugten Ausführungsvariante zumindest einen entlang der Längsachse konisch zulaufenden Abschnitt auf, der in Wirkverbindung mit dem zentralen Hülsenabschnitt tritt. Darüber hinaus ist die an einem freien Ende ein strukturierter, einen Innensechskant bildenden Abschnitt vorgesehen. Ferner kann der Querschnitt der Spannschraubendurchführung zumindest eine Stufe aufweisen, d.h. gestuft ausgebildet sein. Hierzu weist dieser beispielsweise einen zylinderförmigen Abschnitt auf. Vorzugsweise entsteht im Übergangsbereich zwischen dem konisch zulaufenden Abschnitt und dem zylinderförmigen Abschnitt eine Stufe, deren Stufenkante zur Herstellung einer Klemmverbindung mit dem zentralen Hülsenabschnitt verwendet wird.

Weiterhin vorteilhaft sind das erste Innengewinde der Hülsenmutter und das Außengewinde der Trommelschraube als linksdrehendes Gewinde ausgebildet. Die Durchgangsbohrung der Hülsenmutter weist beispielsweise ein zweites Innengewinde auf, welches als rechtsdrehendes Gewinde ausgebildet ist. Hierdurch kann das ebenfalls als rechtsdrehendes Außengewinde einer Spannschraube problemlos mit dem zweiten Innengewinde der Hülsenmutter in Eingriff gebracht werden. Alternativ kann eine gewindefurchende Spannschraube in eine Durchgangsbohrung ohne Gewinde Verwendung finden. Ein Mitdrehen der Trommelschraube beim Eindrehen der Spannschraube wird hierdurch effektiv verhindert.

In einer Ausführungsvariante der Erfindung können in der Spannschraubendurchführung Mitnehmermittel, beispielsweise in Form einer Mitnehmerhülse, eines Klebers oder ähnlicher geeigneter Mitnehmermittel zur Aufnahme einer Spannschraube aufgenommen sein, wobei das zum Durchdringen der Mitnehmermittel mittels der Spannschraube erforderliche Drehmoment größer ist als das zum Lösen der klemmenden Befestigung der Trommelschraube in der Hülsenmutter erforderliche Lösdrehmoment. Weiterhin vorteilhaft sind die Mitnehmermittel derart ausgebildet, dass das zum Durchdringen der Mitnehmermittel mittels der Spannschraube erforderliche Drehmoment kleiner ist als das zwischen dem freien stirnseitigen Ende der Trommelschraube und dem zweiten Bauteil bei der Anlage entstehende Reibmoment.

Ebenfalls ist Gegenstand der Erfindung eine vorgefertigte Baugruppe umfassend zumindest ein, vorzugsweise aus einem Flachmaterial aus Metall oder Kunststoff hergestelltes Bauteil und eine justierbare Befestigungsvorrichtung sowie ein Verfahren zur Herstellung einer derartigen vorgefertigten Baugruppe.

Die Ausdrucke "näherungsweise", "im Wesentlichen" oder "etwa" bedeuten im Sinne der Erfindung Abweichungen vom jeweils exakten Wert um +/-10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:
- Fig. 1: eine schematische Schnittdarstellung durch eine erfindungsgemäße, mit einem ersten Bauteil durch Nieten verbundene justierbare Befestigungsvorrichtung mit einem anliegenden zweiten Bauteil,
- Fig. 2: eine schematische Schnittdarstellung durch eine erfindungsgemäße, mit einem ersten Bauteil durch Nieten verbundene justierbare Befestigungsvorrichtung mit einem beabstandeten zweiten Bauteil,
- Fig. 3: eine schematische Schnittdarstellung durch eine erfindungsgemäße, mit einem ersten Bauteil durch Nieten verbundene justierbare Befestigungsvorrichtung mit mittels einer Spannschraube beabstandet montierten zweiten Bauteil und
- Fig. 4: eine schematische Schnittdarstellung durch eine erfindungsgemäße, mit einem ersten Bauteil durch Nieten verbundene justierbare Befestigungsvorrichtung mit vollständig aufgenommener Trommelschraube.

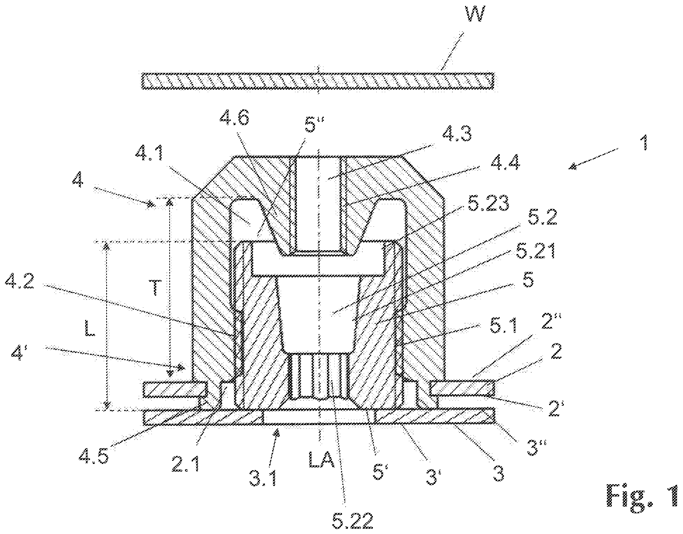

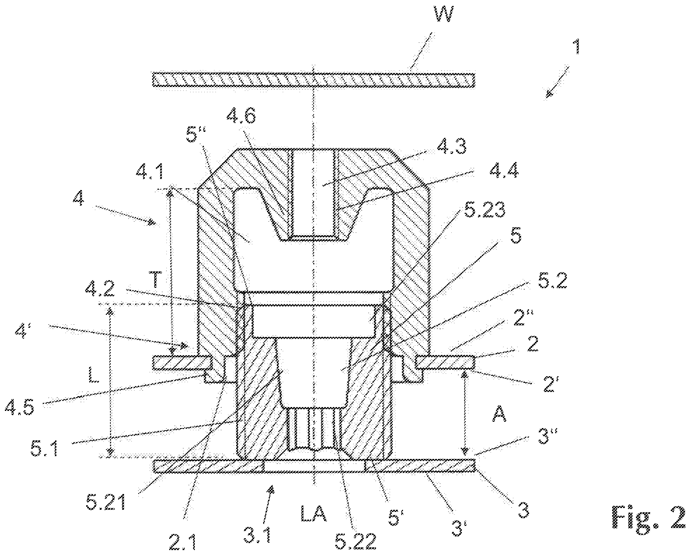

In den Figuren 1 bis 4 ist jeweils mit 1 eine erfindungsgemäß ausgebildete justierbare Befestigungsvorrichtung bezeichnet, welche mit einem ersten zumindest abschnittsweise flachen Bauteil 2 verdrehungssicher verbunden ist. Die justierbare Befestigungsvorrichtung 1 ist zur Herstellung einer Verbindung zwischen dem ersten zumindest abschnittsweise flachen Bauteil 2 mit einem zweiten ebenfalls zumindest abschnittsweise flachen Bauteil 3 in einem vorgegebenen Abstand A vorgesehen. Die Figuren 1 bis 4 zeigen jeweils einen schematischen Längsschnitt durch die justierbare Befestigungsvorrichtung 1 in unterschiedlichen parallel zueinander verlaufenden Schnittebenen, die in oder parallel zur Längsachse LA der justierbare Befestigungsvorrichtung 1 verlaufen.

Sowohl das erste Bauteil 2 als auch das zweite Bauteil 3 sind vorzugsweise aus einem Flachmaterial aus Metall oder Kunststoff, beispielsweise aus einem Stahlblech hergestellt und können Teile einer Halterung für eine Gehäusewand oder eines Tragrahmens eines Gerätes oder einer Maschine, insbesondere einer Haushaltsgerätes wie beispielsweise eines Herdes oder einer Waschmaschine sein. In den Figuren 1 bis 3 ist beispielsweise die zu befestigende Gehäusewand W ausschnittsweise angedeutet.

In den Figuren sind jeweils das erste und zweite Bauteil 2, 3 lediglich ausschnittsweise im Querschnitt dargestellt, um deren Abstand A zueinander im Bereich der erfindungsgemäß ausgebildeten justierbaren Befestigungsvorrichtung 1 zu erläutern. Das erste Bauteil 2 ist vorzugsweise als Press-, Stanz- und/oder Fügeteil ausgebildet, welches Teil einer vorgefertigten Baugruppe sein kann, die vorzugsweise in einem Arbeitsgang hergestellt wird. Derartige vorgefertigte Baugruppen werden in der Serienproduktion von Maschinen und Geräten eingesetzt, um hierdurch die Anzahl der Fertigungsschritte zu reduzieren.

Die erfindungsgemäß justierbare Befestigungsvorrichtung 1 ermöglicht eine Befestigung des ersten und zweiten Bauteils 2, 3 in einem vorgegeben Abstand A, der beispielsweise zwischen 1 mm und 8 mm, vorzugsweise zwischen 2 mm und 6 mm einstellbar ist.

Hierzu weist die justierbare Befestigungsvorrichtung 1 zumindest eine Hülsenmutter 4 mit einer Ausnehmung 4.1 mit einem ersten Innengewinde 4.2 und einer daran entlang der Längsachse LA anschließenden Durchgangsbohrung 4.3 sowie eine Trommelschraube 5 mit einem Außengewinde 5.1 und einer Spannschraubendurchführung 5.2 auf. Die Hülsenmutter 4 und die Trommelschraube 5 sind aus Stahl, insbesondere Edelstahl hergestellt. Auch kann die Durchgangsbohrung 4.3 mit einem zweiten Innengewinde 4.4 aufweisen, welches zum Einschrauben einer Spannschraube 6 vorgesehen ist. Bei Verwendung einer beispielsweise gewindefurchenden Spannschraube 6 kann das zweiten Innengewinde 4.4 auch entfallen.

Im montierten Zustand steht das Außengewinde 5.1 der Trommelschraube 5 mit dem ersten Innengewinde 4.2 der Hülsenmutter 4 in Eingriff und ist zumindest abschnittsweise in der Ausnehmung 4.1 aufgenommen. Vorzugsweise weist die Ausnehmung 4.1 eine Ausnehmungstiefe T auf, welche eine vollständige Aufnahme der Trommelschraube 5 in der Ausnehmung 4.1 ermöglicht. Hierzu ist die Länge L der Trommelschraube 5 kleiner als die Ausnehmungstiefe T gewählt, wobei im Sinne der Erfindung unter Ausnehmungstiefe T die Stelle der Ausnehmung 4.1 mit dem größten Abstand zu dem die Öffnung der Ausnehmung 4.1 einschließenden freien stirnseitigen Randbereich 4' verstanden wird, welcher mit dem ersten Bauteil 2 verdrehungssicher verbunden wird.

Die Hülsenmutter 4 weist hierzu an dem die Öffnung der Ausnehmung 4.1 umschließenden freien stirnseitigen Randbereich 4' einen Nietbundabschnitt 4.5 auf, der konzentrisch zur Längsachse LA verläuft und sich entlang der Längsachse LA nach unten erstreckt. Der Nietbundabschnitt 4.5 ist vorzugsweise hülsenartig ausgebildet. Der Nietbundabschnitt 4.5 weist ferner im Vergleich zu der daran anschließenden Hülsenwandung der Hülsenmutter 4 eine reduzierte Wandstärke auf, so dass sich ein stufenartiger Übergang zwischen der Außen- bzw. Innenfläche der Hülsenmutter 4 und dem Nietbundabschnitt 4.5 ergibt, an dem der Rand einer Fügeöffnung 2.1 im ersten Bauteil 2 anliegt. Die Fügeöffnung 2.1 ist hierbei derart bemessen, dass der hülsenartige Nietbundabschnitt 4.5 hindurchführbar ist und sich der gestufte Randbereich 4' auf der Oberseite 4" des ersten Bauteils 2 abstützt. Auch kann der Nietbundabschnitt 4.5 leicht konisch noch innen oder außen entlang der Längsachse LA verlaufen.

Der Nietbundabschnitt 4.5 wird erfindungsgemäß zur verdrehungssicheren Befestigung der Hülsenmutter 4 mit dem ersten Bauteil 2 mit seinem Nietbundabschnitt 4.5 durch die Fügeöffnung 2.1 geführt und derart bleibend verformt, das der über die Unterseite 2' des ersten Bauteils 2 überstehende Nietbundabschnitt 4.5 bezogen auf die Längsachse LA radial nach außen verformt wird und damit an der Unterseite 2' des ersten Bauteils 2 zur Anlage kommt. In den Figuren 1 bis 4 ist jeweils der hülsenartige Nietbundabschnitt 4.5 bereits verformt dargestellt. Dieser liegt an der Unterseite 2' des ersten Bauteils 2 an und umgreift somit den Rand der Fügeöffnung 2.1. Ein Teil des verformten Nietbundabschnittes 4.5 steht somit leicht nach unten von der Unterseite 2' des ersten Bauteils 2 ab, d.h. eine direkte Anlage der Unterseite 2' der ersten Bauteils 2 an der Oberseite 3" des zweiten Bauteils 3 ist nicht vorgesehen. Vorteilhaft ist hierdurch auch der minimale Betrag des Abstand A vorgegeben, welcher nicht unterschritten werden kann.

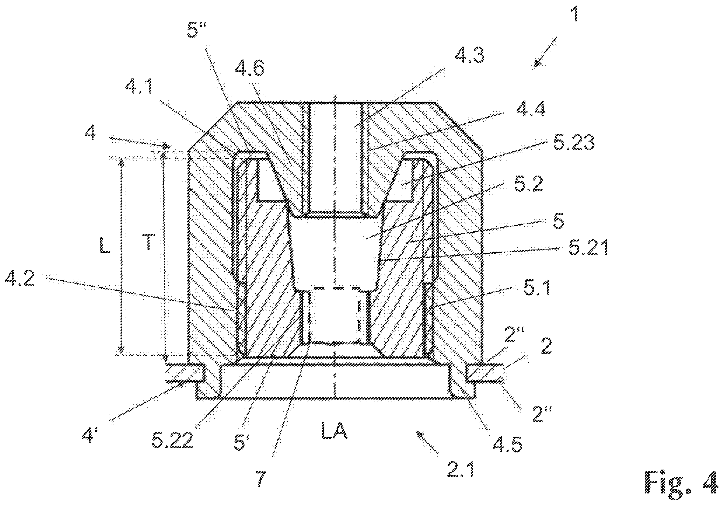

Erfindungsgemäß erfolgt die Befestigung der Hülsenmutter 4 am ersten Bauteil 2 zur Herstellung einer vorgefertigten Baugruppe durch Pressnieten oder Taumelnieten, und zwar vorzugsweise in einem Arbeitsgang. Vor der Durchführung des Nietvorganges ist die Trommelschraube 5 bereits in die Ausnehmung 4.1 der Hülsenmutter 4 eingeschraubt, und zwar derart, dass - wie in Figur 4 dargestellt - die Trommelschraube 5 vollständig in der Ausnehmung 4.1 der Hülsenmutter 4 aufgenommen ist. Hierbei kommt vorzugsweise das untere freie Ende 5' oberhalb des gestuften Randbereiches 4' der Hülsenmutter 4 zuliegen. Somit weist die vorgefertigte Baugruppe besonders vorteilhaft bereits die für die Montage erforderliche Trommelschraube 5 auf. Auch kann das erste Bauteil 2, insbesondere bei Realisierung in Form eines Stahlbleches dieses im Bereich der Fügeöffnung 2.1 teilweise oder gänzlich einen kleineren Durchmesser als der größte Durchmesser des Nietbundabschnittes 4.5 aufweisen und dann die Befestigung mittels Einpressen erfolgen.

Erfindungsgemäß weist die Hülsenmutter 4 einen in die Ausnehmung 4.1 in Richtung des Nietbundabschnittes 4.5 hineinragenden und konisch zulaufenden zentralen Hülsenabschnitt 4.6 auf, der konzentrisch zur Längsachse LA ausgebildet ist und die Durchgangsbohrung 4.3 zusammen mit dem zweiten Innengewinde 4.4 aufnimmt. In der Trommelschraube 5 ist eine zumindest abschnittsweise zur äußeren Form des zentralen Hülsenabschnitt 4.6 korrespondierende Spannschraubendurchführung 5.2 vorgesehen, die zur zumindest abschnittsweisen Aufnahme des zentralen Hülsenabschnittes 4.6 der Hülsenmutter 4 ausgebildet ist. Vorzugsweise kann bei vollständigen Einschrauben der Trommelschraube 5 in die Hülsenmutter 4 eine Klemmverbindung hergestellt werden, so dass die Trommelschraube 5 verliersicher in der Hülsenmutter 4 aufgenommen ist.

Hierzu weist die Spannschraubendurchführung 5.2 der Trommelschraube 5 zumindest einen konisch zulaufenden Abschnitt 5.21 auf, in dem der Durchmesser der Spannschraubendurchführung 5.2 entlang der Längsachse LA in Richtung des zentralen Hülsenabschnittes 4.5 zunimmt. An den konisch zulaufenden Abschnitt 5.21 der Spannschraubendurchführung 5.2 der Trommelschraube 5 schließt sich an dem dem zentralen Hülsenabschnitt 4.5 gegenüberliegenden Ende 5' der Trommelschraube 5 ein einen Innensechskant bildender strukturierter Abschnitt 5.2 der Spannschraubendurchführung 5.2 an, über den ein Ein- oder Ausschrauben der Trommelschraube 5 mittels eines Inbuswerkzeuges möglich ist. An dem dem Innensechskant gegenüberliegenden Ende 5" der Trommelschraube 5 folgt dem konisch zulaufenden Abschnitt 5.21 ein im Querschnitt zylinderförmiger Abschnitt 5.23 der Spannschraubendurchführung 5.2 mit einem im Vergleich zum konisch zulaufenden Abschnitt 5.21 deutlich größeren Durchmesser, so dass eine Stufung der Spannschraubendurchführung 5.2 entsteht. Vorteilhaft ist durch die beschriebene, insbesondere gestufte Ausbildung der Spannschraubendurchführung 5.2 der Trommelschraube 5 und des zentralen Hülsenabschnittes 4.6 der Hülsenmutter 4 eine vollständige Aufnahme der Trommelschraube 5 in der Hülsenmutter 4 möglich ohne das hierdurch die Länge der Hülsenmutter 4 erhöht werden muss. Die Länge der Hülsenmutter 4 sollte aus fertigungstechnischen Gründen 20 mm nicht überschreiten, wobei der Abstand A vorzugsweise zwischen 1 mm und 8 mm einstellbar ist.

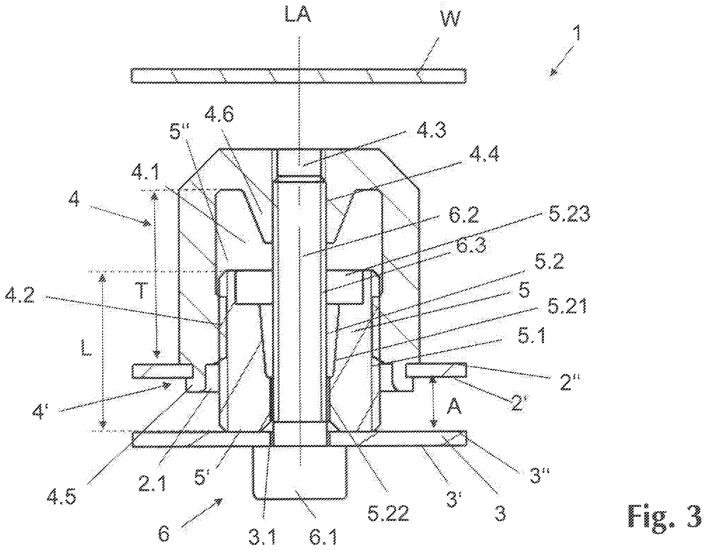

Das zweite Innengewinde 4.4 der Hülsenmutter 4 ist ferner zur Aufnahme einer Spannschraube 6 ausgebildet, die einen Schraubenkopf 6.1 und einen daran anschließenden Schraubenschaft 6.2 mit Außengewinde 6.3 aufweist. Die Spannschraube 6 ist beispielsweise als Zylinderschraube oder Sechskantschraube ausgebildet. In Figur 3 ist beispielsweise eine in der Befestigungsvorrichtung 1 aufgenommene Spannschraube 6 in einem schematischen Querschnitt dargestellt.

Das erste Innengewinde 4.2 der Hülsenmutter 4 und das Außengewinde 5.1 der Trommelschraube 5 sind vorzugsweise durch ein linksdrehendes Gewinde gebildet, wohingegen das zweite Innengewinde 4.4 der Hülsenmutter 4 und Außengewinde 6.3 der Spannschraube 6 als rechtsdrehendes Gewinde realisiert sind.

Nachstehend wird das erfindungsgemäße Verfahren zur Herstellung einer vorgefertigten Baugruppe aus zumindest einer justierbaren Befestigungsvorrichtung 1 und einem ersten Bauteil 2 beschrieben.

Die in den Figuren nicht dargestellte vorgefertigte Baugruppe wird vorzugsweise in einem Arbeitsgang durch mehrere Press-, Stanz- und/oder Fügevorgänge hergestellt. Hierzu wird zunächst zumindest eine Fügeöffnung 2.1 in das erste aus einem Flachmaterial aus Metall oder Kunststoff hergestellten Bauteil 2 eingebracht. Ferner wird zumindest eine justierbare Befestigungsvorrichtung 1 dem Bauteil 2 zugeführt, und zwar in die Fügeöffnung 2.1 in der zuvor beschrieben Weise eingebracht. Die justierbare Befestigungsvorrichtung 1 umfasst die Hülsenmutter 4 und die darin aufgenommene Trommelschraube 5, welche in die Ausnehmung 4.1 vollständig eingeschraubt ist und aufgrund der erfindungsgemäßen Ausgestaltung der Spannschraubendurchführung 5.2 der Trommelschraube 5 und des in diese eingreifenden zentralen Hülsenabschnittes 4.6 ist dieser klemmend befestigt ist. Die Trommelschraube 5 ist somit verliersicher in der Hülsenmutter 4 vormontiert.

Die derart vormontierte justierbare Befestigungsvorrichtung 1 wird mit dem Nietbundabschnitt 4.5 in die Fügeöffnung 2.1 eingeführt, und zwar derart, dass der Randbereich 4' der Hülsenmutter 4 auf der Oberseite 2" des ersten Bauteils 2 aufliegt. Mittels eines geeigneten stempelartigen und in den hülsenartigen Nietbundabschnitt 4.5 von der Unterseite 2' des ersten Bauteils 2 eingeführten Werkzeuges wird dann der noch unverformte hülsenartige Nietbundabschnitt 4.5 bleibend verformt, und zwar derart, dass dieser den Rand der Fügeöffnung 2.1 umgreift, wodurch die Hülsenmutter 4 am ersten Bauteil 1 unverlierbar fixiert ist. Auch kann ein Einpressen der vormontierten justierbaren Befestigungsvorrichtung 1 in Bereich der Fügeöffnung 2.1 erfolgen.

Bei der derartig vorgefertigten Baugruppe wird im Rahmen der Serienfertigung die klemmende Befestigung der Trommelschraube 5 in der am ersten Bauteil 2 montierten Hülsenmutter 5 gelöst, vorzugsweise unter Verwendung eines Inbuswerkzeuges. Durch entsprechendes Herausschrauben der Trommelschraube 5 aus der Hülsenmutter 4 wird der Abstand A zwischen dem ersten und zweiten Bauteil 2, 3 eingestellt. Hierzu liegt das von der Unterseite 2' des ersten Bauteils 2 nach unten abstehende bzw. über den verformten Nietbundabschnitt 4.5 überstehende freie Ende 5' der Trommelschraube 5 in Anlage mit dem zweiten Bauteil 3 gebracht, und zwar mit dessen Oberseite 3". Die Spannschraubenführung 5.2 fluchtet hierbei mit einer in das zweite Bauteil 2 eingebrachten Montage- oder Befestigungsbohrung 3.1 zur Aufnahme und Durchführung der Spannschraube 6, welche durch die Montage- oder Befestigungsbohrung 3.1, die anschließende Spannschraubenführung 5.2 der Trommelschraube 5 zur Durchgangsbohrung 4.3 der Hülsenmutter 4 geführt wird, so dass dessen Außengewinde 6.3 in das zweite Innengewinde 4.4 der Hülsenmutter 4 in Eingriff bringbar ist. Durch das Einschrauben der Spannschraube 6 wird das zweite Bauteil 2 zwischen dem freien Ende 5' der Trommelschraube 5 und dem Schraubenkopf 6.1 der Spannschraube 6 verspannt und somit fixiert. Der Schraubenkopf 6.1 liegt hierzu an der Unterseite 3' des zweiten Bauteils 3 an.

In einer nicht in den Figuren dargestellten Ausführungsvariante der Erfindung können in der Durchgangsbohrung 5.2, beispielsweise im Bereich des einen Innensechskant ausbildenden strukturierter Abschnittes 5.2 Mitnehmermittel 7 beispielsweise in Form einer Mitnehmerhülse, eines Klebers oder eines ähnlich geeigneten Mitnehmermittels aufgenommen sein. Bei Verwendung einer Mitnehmerhülse ist diese vorzugsweise aus Kunststoff hergestellt ist. Die Mitnehmermittel 7 sind derart ausgebildet, dass das zum Durchdringen der Mitnehmermittel 7 mittels der Spannschraube 6 erforderliche Drehmoment größer ist als das zum Lösen der klemmenden Befestigung der Trommelschraube 5 in der Hülsenmutter 4 erforderliche Lösdrehmoment, so dass beim Eindrehen der Spannschraube 6 im Uhrzeigersinn zunächst die Trommelschraube 5 aus der Hülsenmutter 4 herausgeschraubt wird, und zwar so lange bis diese in Anlage mit dem zweiten Bauteil 2 gebracht ist und der gewünschte Abstand A sich eingestellt hat. Aufgrund des entstehenden Reibmomentes zwischen dem freien stirnseitigen Ende 5' der Trommelschraube 5 und dem zweiten Bauteil 2 wird das zum Durchdrehen der Mitnehmermittel 7 erforderliche Drehmoment erreicht und das Außengewinde 6.3 der Spannschraube 6 in Eingriff mit dem zweiten Innengewinde 4.4 der Hülsenmutter 4 gebracht, d.h. die Trommelschraube 5 über die Spannschraube 6 mit dem zweiten Bauteil 2 verspannt. Hierzu ist das zum Durchdringen der Mitnehmermittel 7 erforderliche Drehmoment kleiner als das entstehende Reibmoment zwischen der Trommelschraube 5 und dem zweiten Bauteil 2 gewählt. Vorteilhaft kann hierdurch das Lösen der vormontierten Trommelschraube 5, Einstellen eines vorgegebenen Abstandes A und das Verspannen der justierbaren Befestigungsvorrichtung 1 in einem Arbeitsgang erfolgen.

In einer weiteren, nicht in den Figuren dargestellten Ausführungsvariante ist übersteigt die Länge L der Trommelschraube 5 die Ausnehmungstiefe T der Hülsenmutter 4, d.h. das unter freie Ende 5' der Trommelschraube 5 steht über den unverformten Nietbundabschnitt 4.5 nach außen weg. Zum Verformen des Nietbundabschnittes 4.5 zur verdrehungssicheren Befestigung der Hülsenmutter 4 am ersten Bauteil 2 findet hierzu ein Nietwerkzeug, insbesondere ein Nietstempel Verwendung, welches eine stirnseitige Ausnehmung oder Aussparung aufweist, welche vorzugsweise einen kreisförmigen Querschnitt aufweist und deren Ausnehmungstiefe an die nach außen überstehende Längenabschnitt der Trommelschraube 5 angepasst ist. Beim Verformen des Nietbundabschnittes 4.5 wird somit das abstehende freie Ende 5' der Trommelschraube 5 in der stirnseitigen Ausnehmung oder Aussparung des Nietwerkzeug, insbesondere Nietstempels aufgenommen. Damit ist selbst bei einer nicht vollständig in der Trommelschraube 5 aufgenommener Trommelschraube 5 problemlos ein Verformen des Nietbundabschnittes 4.5 möglich. Hierdurch kann besonders vorteilhaft die der gesamte Höhenaufbau der justierbare Befestigungsvorrichtung 1 noch weiter reduziert werden, d.h. es ergibt sich neben einer Reduzierung des Bauhöhe auch noch ein Kostenersparnis aufgrund des reduzierten Materialverbrauchs.

### Bezugszeichenliste

- 1: justierbare Befestigungsvorrichtung
- 2: erstes Bauteil
- 2': Unterseite
- 2": Oberseite
- 2.1: Fügeöffnung
- 3: zweites Bauteil
- 3': Unterseite
- 3": Oberseite
- 3.1: Montage- oder Befestigungsbohrung
- 4: Hülsenmutter
- 4': freier Randbereich
- 4.1: Ausnehmung
- 4.2: erstes Innengewinde
- 4.3: Durchgangsbohrung
- 4.4: zweites Innengewinde
- 4.5: Nietbundabschnitt
- 4.6: zentraler Hülsenabschnitt
- 5: Trommelschraube
- 5', 5": freien Enden
- 5.1: Außengewinde
- 5.2: Spannschraubendurchführung
- 5.21: konisch zulaufender Abschnitt
- 5.22: strukturierter Abschnitt
- 5.23: zylinderförmiger Abschnitt
- 6: Spannschraube
- 6.1: Schraubenkopf
- 6.2: Schraubenschaft
- 6.3: Außengewinde
- 7: Mitnehmermittel
- A: Abstand
- L: Länge der Trommelschraube
- LA: Längsachse
- T: Ausnehmungstiefe
- W: Gehäusewandung

## Patentansprüche

1. Justierbare Befestigungsvorrichtung umfassend zumindest eine Hülsenmutter (4) mit einer Ausnehmung (4.1) mit einem ersten Innengewinde (4.2) und einer daran entlang der Längsachse (LA) der Befestigungsvorrichtung (1) anschließenden Durchgangsbohrung (4.3) sowie eine Trommelschraube (5) mit einem Außengewinde (5.1) und einer Spannschraubendurchführung (5.2), bei der die Trommelschraube (5) mit dem Außengewinde (5.1) in das erste Innengewinde (4.2) der Hülsenmutter (4) eingreift, **dadurch gekennzeichnet, dass** die Hülsenmutter (4) an dem die Öffnung der Ausnehmung (4.1) bildenden freien Randbereich (4') einen Nietbundabschnitt (4.5) aufweist, dass die Hülsenmutter (4) einen in die Ausnehmung (4.1) in Richtung des Nietbundabschnittes (4.5) hineinragenden zentralen Hülsenabschnitt (4.6) aufweist und dass die Spannschraubendurchführung (5.2) der Trommelschraube (5) zur zumindest teilweisen Aufnahme des zentralen Hülsenabschnittes (4.6) ausgebildet ist und dass die Hülsenmutter (4) und die Trommelschraube (5) aus Stahl, insbesondere aus Edelstahl hergestellt sind.

2. Justierbare Befestigungsvorrichtung nach Anspruch 1, **dadurch gekennzeichnet, dass** der Nietbundabschnitt (4.5) hülsenartig ausgebildet ist, der konzentrisch zur Längsachse (LA) verläuft und/oder dass der Nietbundabschnitt (4.5) leicht konisch nach außen oder innen entlang der Längsachse verläuft.

3. Justierbare Befestigungsvorrichtung nach Anspruch 1 oder 2, **dadurch gekennzeichnet, dass** der zentrale Hülsenabschnitt (4.6) die Durchgangsbohrung (4.3) der Hülsenmutter (4) aufnimmt.

4. Justierbare Befestigungsvorrichtung nach einem der Ansprüche 1 bis 3, **dadurch gekennzeichnet, dass** der zentrale Hülsenabschnitt (4.6) in Richtung des freien Randbereiches (4') entlang der Längsachse (LA) konisch zuläuft und/oder dass der der zentrale Hülsenabschnitt (4.6) konzentrisch zur Längsachse (LA) ausgebildet ist.

5. Justierbare Befestigungsvorrichtung nach einem der Ansprüche 1 bis 4, **dadurch gekennzeichnet, dass** die Spannschraubendurchführung (5.2) zumindest einen entlang der Längsachse (LA) konisch zulaufenden Abschnitt (5.21) aufweist und/oder dass die Spannschraubendurchführung (5.2) an einem freien Ende (5') einen strukturierten, einen Innensechskant bildenden Abschnitt (5.22) aufweist.

6. Justierbare Befestigungsvorrichtung nach einem der Ansprüche 1 bis 5, **dadurch gekennzeichnet, dass** die Spannschraubendurchführung (5.2) zumindest einen gestuft ausgebildeten Querschnitt aufweist.

7. Justierbare Befestigungsvorrichtung nach einem der Ansprüche 1 bis 6, **dadurch gekennzeichnet, dass** die Ausnehmung (4.1) zur vollständigen Aufnahme der Trommelschraube (5) ausgebildet ist.

8. Justierbare Befestigungsvorrichtung nach einem der Ansprüche 1 bis 7, **dadurch gekennzeichnet, dass** das erste Innengewinde (4.2) der Hülsenmutter (4) und das Außengewinde (5.1) der Trommelschraube (5) als linksdrehendes Gewinde ausgebildet sind.

9. Justierbare Befestigungsvorrichtung nach einem der Ansprüche 1 bis 8, **dadurch gekennzeichnet, dass** die Durchgangsbohrung (4.3) ein zweites, vorzugsweise als rechtsdrehendes Gewinde ausgebildetes Innengewinde (4.4) aufweist.

10. Justierbare Befestigungsvorrichtung nach einem der Ansprüche 1 bis 9, **dadurch gekennzeichnet, dass** in der Spannschraubendurchführung (5.2) Mitnehmermittel (7) zur Aufnahme einer Spannschraube (6) vorgesehen sind, wobei das zum Durchdringen der Mitnehmermittel (7) mittels der Spannschraube (6) erforderliche Drehmoment größer ist als das zum Lösen der klemmenden Befestigung der Trommelschraube (5) in der Hülsenmutter (4) erforderliche Lösdrehmoment.

11. Justierbare Befestigungsvorrichtung nach Anspruch 10, **dadurch gekennzeichnet, dass** das zum Durchdringen der Mitnehmermittel (7) mittels der Spannschraube (6) erforderliche Drehmoment kleiner ist als das Reibmoment, das zwischen dem freien stirnseitigen Ende (5') der Trommelschraube (5) und einem zweiten Bauteil (3) bei der Anlage der Trommelschraube (5) an das zweite Bauteil (3) entsteht.

12. Justierbare Befestigungsvorrichtung nach Anspruch 10 oder 11, **dadurch gekennzeichnet, dass** das die Mitnehmermittel (7) durch eine Mitnehmerhülse, einen Kleber oder andere geeignete Mitnehmermittel gebildet sind.

13. Justierbare Befestigungsvorrichtung nach einem der Ansprüche 1 bis 12, **dadurch gekennzeichnet, dass** die Hülsenmutter (4) und die Trommelschraube (5) zur Herstellung einer Klemmverbindung zwischen der Spannschraubendurchführung (5.2) und dem zentralen Hülsenabschnitt (4.6) ausgebildet sind.

14. Vorgefertigte Baugruppe umfassend zumindest ein, vorzugsweise aus einem Flachmaterial aus Metall oder Kunststoff hergestelltes Bauteil (2) und eine justierbare Befestigungsvorrichtung (1) nach einem der vorhergehenden Ansprüche.

15. Verfahren zur Herstellung einer vorgefertigten Baugruppe nach Anspruch 14, **dadurch gekennzeichnet, dass** zumindest eine Fügeöffnung (2.1) in das Bauteil (2) eingebracht wird, dass die justierbare Befestigungsvorrichtung (1) durch vollständiges Einschrauben der Trommelschraube (5) in die Hülsenmutter (5) vormontiert wird, dass die derart vormontierte justierbare Befestigungsvorrichtung (1) der Fügeöffnung (2.1) zugeführt wird und dass die Hülsenmutter (5) der vormontierten justierbaren Befestigungsvorrichtung (1) mit dem Bauteil (2) durch Einpressen, Pressnieten oder Taumelnieten in der Fügeöffnung verdrehungs- und verliersicher befestigt wird.

## Claims

1. Adjustable fastening device comprising at least one sleeve nut (4) having a recess (4.1) with a first internal thread (4.2) and a through bore (4.3) adjoining thereto along the longitudinal axis (LA) of the fastening device (1) and a drum screw (5) having an external thread (5.1) and a tensioning-screw passage (5.2), wherein the drum screw (5) engages by way of the external thread (5.1) into the first internal thread (4.2) of the sleeve nut (4), **characterized in that** the sleeve nut (4) comprises a rivet collar section (4.5) at the free edge region (4') forming the opening of the recess (4.1), **in that** the sleeve nut (4) comprises a central sleeve section (4.6) protruding into the recess (4.1) in the direction of the rivet collar section (4.5) and **in that** the tensioning-screw passage (5.2) of the drum screw (5) is configured for at least partially accommodating the central sleeve section (4.6) and **in that** the sleeve nut (4) and the drum screw (5) are produced from steel, particularly from high-grade steel.

2. Adjustable fastening device according to claim 1, **characterized in that** the rivet collar section (4.5) is designed in a sleeve-like manner, the rivet collar section runs concentrically to the longitudinal axis (LA) and/or **in that** the rivet collar section (4.5) runs slightly conically outwards or inwards along the longitudinal axis.

3. Adjustable fastening device according to claim 1 or 2, **characterized in that** the central sleeve section (4.6) accommodates the through bore (4.3) of the sleeve nut (4).

4. Adjustable fastening device according to one of claims 1 to 3, **characterized in that** the central sleeve section (4.6) tapers conically in the direction of the free edge region (4') along the longitudinal axis (LA) and/or **in that** the central sleeve section (4.6) is designed concentrically to the longitudinal axis (LA).

5. Adjustable fastening device according to one of claims 1 to 4, **characterized in that** the tensioning-screw passage (5.2) has at least one section (5.21) conically tapering along the longitudinal axis (LA) and/or **in that** the tensioning-screw passage (5.2) at a free end (5') has a structured section (5.22) forming a hexagonal socket.

6. Adjustable fastening device according to one of claims 1 to 5, **characterized in that** the tensioning-screw passage (5.2) has at least a cross section designed in a tiered manner.

7. Adjustable fastening device according to one of claims 1 to 6, **characterized in that** the recess (4.1) is constructed for completely accommodating the drum screw (5).

8. Adjustable fastening device according to one of claims 1 to 7, **characterized in that** the first internal thread (4.2) of the sleeve nut (4) and the external thread (5.1) of the drum screw (5) are constructed as a left-handed thread.

9. Adjustable fastening device according to one of claims 1 to 8, **characterized in that** the through bore (4.3) comprises a second internal thread (4.4) preferably designed as a right-handed thread.

10. Adjustable fastening device according to one of claims 1 to 9, **characterized in that** driver means (7) for accommodating a tensioning screw (6) are provided in the tensioning-screw passage (5.2), wherein the torque required for penetrating the driver means (7) by means of the tensioning screw (6) is greater than the loosening torque required for loosening the clamping fastening of the drum screw (5) in the sleeve nut (4).

11. Adjustable fastening device according to claim 10, **characterized in that** the torque required for penetrating the driver means (7) by means of the tensioning screw (6) is smaller than the moment of friction which results between the free front end (5') of the drum screw (5) and a second component (3) when the drum screw (5) bears against the second component (3).

12. Adjustable fastening device according to claim 10 or 11, **characterized in that** the driver means (7) are formed by a driver sleeve, an adhesive or other suitable driver means.

13. Adjustable fastening device according to one of claims 1 to 12, **characterized in that** the sleeve nut (4) and the drum screw (5) are configured for producing a clamping connection between the tensioning-screw passage (5.2) and the central sleeve section (4.6).

14. Prefabricated assembly comprising at least one component (2), preferably produced from a flat material made from metal or plastic, and an adjustable fastening device (1) according to one of the preceding claims.

15. Method for producing a prefabricated assembly according to claim 14, **characterized in that** at least one joint opening (2.1) is introduced into the component (2), **in that** the adjustable fastening device (1) is premounted by completely screwing the drum screw (5) into the sleeve nut (5), **in that** the adjustable fastening device (1) premounted in this manner is supplied to the joint opening (2.1) and **in that** the sleeve nut (5) of the premounted adjustable fastening device (1) is fastened with the component (2) in the joint opening in a torsion- and loss-proof manner by pressing, press riveting or wobble riveting.

## Revendications

1. Dispositif de fixation ajustable comprenant au moins un écrou douille (4) comprenant un évidement (4.1) avec un premier filetage intérieur (4.2) et un alésage traversant (4.3) s'y raccordant le long de l'axe longitudinal (LA) du dispositif de fixation (1) ainsi qu'une vis tambour (5) avec un filetage extérieur (5.1) et un passage de vis de serrage (5.2), dans lequel la vis tambour (5) vient en prise avec le filetage extérieur (5.1) dans le premier filetage intérieur (4.2) de l'écrou douille (4), **caractérisé en ce que** l'écrou douille (4) comporte une section de collier de rivetage (4.5) sur la zone de bordure (4') libre formant l'ouverture de l'évidement (4.1), **en ce que** l'écrou douille (4) comporte une section de douille (4.6) centrale pénétrant dans l'évidement (4.1) en direction de la section de collier de rivetage (4.5) et **en ce que** le passage de vis de serrage (5.2) de la vis tambour (5) est constitué pour la réception au moins en partie de la section de douille centrale (4.6) et **en ce que** l'écrou douille (4) et la vis tambour (5) sont fabriqués en acier, notamment en acier fin.

2. Dispositif de fixation ajustable selon la revendication 1, **caractérisé en ce que** la section de collier de rivetage (4.5) est constituée en forme de douille, qui passe de manière concentrique par rapport à l'axe longitudinal (LA) et/ou **en ce que** la section de collier de rivetage (4.5) passe de manière légèrement conique vers l'extérieur ou à l'intérieur le long de l'axe longitudinal.

3. Dispositif de fixation ajustable selon la revendication 1 ou 2, **caractérisé en ce que** la section de douille centrale (4.6) loge l'alésage traversant (4.3) de l'écrou douille (4).

4. Dispositif de fixation ajustable selon l'une quelconque des revendications 1 à 3, **caractérisé en ce que** la section de douille centrale (4.6) va de manière conique en direction de la zone de bordure libre (4') le long de l'axe longitudinal (LA) et/ou **en ce que** la section de douille centrale (4.6) est constituée concentrique par rapport à l'axe longitudinal (LA).

5. Dispositif de fixation ajustable selon l'une quelconque des revendications 1 à 4, **caractérisé en ce que** le passage de la vis de serrage (5.2) comporte au moins une section (5.21) concourant de façon conique le long de l'axe longitudinal (LA) et/ou **en ce que** le passage de la vis de serrage (5.2) comporte sur une extrémité libre (5') une section (5.22) structurée, formant un hexagone intérieur.

6. Dispositif de fixation ajustable selon l'une quelconque des revendications 1 à 5, **caractérisé en ce que** le passage de la vis de serrage (5.2) comporte au moins une section transversale constituée échelonnée.

7. Dispositif de fixation ajustable selon l'une quelconque des revendications 1 à 6, **caractérisé en ce que** l'évidement (4.1) est constitué pour loger complètement la vis tambour (5).

8. Dispositif de fixation ajustable selon l'une quelconque des revendications 1 à 7, **caractérisé en ce que** le premier filetage intérieur (4.2) de l'écrou douille (4) et le filetage extérieur (5.1) de la vis tambour (5) sont constitués en tant que filetage à gauche.

9. Dispositif de fixation ajustable selon l'une quelconque des revendications 1 à 8, **caractérisé en ce que** l'alésage traversant (4.3) comporte un deuxième filetage intérieur (4.4) constitué de préférence comme filetage à droite.

10. Dispositif de fixation ajustable selon l'une quelconque des revendications 1 à 9, **caractérisé en ce que** dans le passage de la vis de serrage (5.2) sont prévus des moyens d'entraînement (7) pour loger une vis de serrage (6), le couple nécessaire pour traverser les moyens d'entraînement (7) au moyen de la vis de serrage (6) est plus grand que le couple de desserrage nécessaire pour desserrer la fixation bloquante de la vis tambour (5) dans l'écrou douille (4).

11. Dispositif de fixation ajustable selon la revendication 10, **caractérisé en ce que** le couple nécessaire pour traverser les moyens d'entraînement (7) au moyen de la vis de serrage (6) est plus petit que le couple de frottement qui se produit entre l'extrémité avant libre (5') de la vis tambour (5) et une deuxième pièce (3) lors de la mise en place de la vis tambour (5) sur la deuxième pièce (3).

12. Dispositif de fixation ajustable selon la revendication 10 ou 11, **caractérisé en ce que** les moyens d'entraînement (7) sont formés par une douille d'entraînement, un adhésif ou d'autres moyens d'entraînement appropriés.

13. Dispositif de fixation ajustable selon l'une quelconque des revendications 1 à 12, **caractérisé en ce que** l'écrou douille (4) et la vis tambour (5) sont constitués pour réaliser une liaison de blocage entre le passage de la vis de serrage (5.2) et la section de douille centrale (4.6).

14. Module préfabriqué comprenant au moins une pièce (2) fabriquée de préférence dans un matériau plat en métal ou en matière plastique et un dispositif de fixation ajustable (1) selon l'une quelconque des revendications précédentes.

15. Procédé de fabrication d'un module préfabriqué selon la revendication 14, **caractérisé en ce qu'**au moins une ouverture de jointoiement (2.1) est aménagée dans la pièce (2) **en ce que** le dispositif de fixation ajustable (1) est prémonté par vissage complet de la vis tambour (5) dans l'écrou douille (5), **en ce que** le dispositif de fixation ajustable prémonté (1) de cette manière est amené vers l'ouverture de jointoiement (2.1) et **en ce que** l'écrou douille (5) du dispositif de fixation ajustable (1) est fixé solidaire en rotation et de façon imperdable à la pièce (2) par enfoncement, par rivets à sertir ou rivets à fluage radial dans l'ouverture de jointoiement.
